(19) Europäisches Patentamt European Patent Office Office européen des brevets

(11) **EP 4 177 694 B1**

(12) **EUROPEAN PATENT SPECIFICATION**

(45) Date of publication and mention of the grant of the patent:
**15.04.2026 Bulletin 2026/16**

(21) Application number: **21831582.8**

(22) Date of filing: **22.06.2021**

(51) International Patent Classification (IPC):
**B66C 23/88** *(2006.01)*     **B66F 9/24** *(2006.01)*
**G06V 20/58** *(2022.01)*     **G06V 40/10** *(2022.01)*
**B66F 9/075** *(2006.01)*     **B66F 17/00** *(2006.01)*

(52) Cooperative Patent Classification (CPC):
**B66F 9/0755; B66F 9/24; B66F 17/003;
G06V 20/58; G06V 40/103**

(86) International application number:
**PCT/JP2021/023647**

(87) International publication number:
**WO 2022/004495 (06.01.2022 Gazette 2022/01)**

(54) **OBSTACLE DETECTOR AND OBSTACLE DETECTION METHOD**

HINDERNISDETEKTOR UND HINDERNISDETEKTIONSVERFAHREN

DÉTECTEUR D'OBSTACLE ET PROCÉDÉ DE DÉTECTION D'OBSTACLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.07.2020 JP 2020114903**

(43) Date of publication of application:
**10.05.2023 Bulletin 2023/19**

(73) Proprietor: **KABUSHIKI KAISHA TOYOTA
JIDOSHOKKI
Kariya-shi, Aichi 448-8671 (JP)**

(72) Inventor: **ISHIZAKI Masataka
Kariya-shi, Aichi 448-8671 (JP)**

(74) Representative: **Hoffmann Eitle
Patent- und Rechtsanwälte PartmbB
Arabellastraße 30
81925 München (DE)**

(56) References cited:
**EP-A1- 3 779 512      WO-A1-2016/174977
WO-A1-2019/187937   JP-A- 2014 097 867
JP-A- 2019 089 636   JP-A- 2019 174 347**

• **NATIONAL INSTITUTE OF STANDARDS AND
TECHNOLOGY: "Performance metrics for
intelligent systems (PERMIS) workshop, 2010
NIST SP 1113-PERMIS", 31 December 2010
(2010-12-31), pages 1 - 392, XP061056977,
Retrieved from the Internet <URL:https://
nvlpubs.nist.gov/nistpubs/Legacy/SP/
nistspecialpublication1113-PERMIS.pdf>
[retrieved on 20101231], DOI: 10.6028/
NIST.SP.1113-PERMIS**

**EP 4 177 694 B1**

# EP 4 177 694 B1

**Description**

TECHNICAL FIELD

The present disclosure relates to an obstacle detector and an obstacle detection method.

BACKGROUND ART

An obstacle detector for detecting an obstacle is mounded in a moving body such as a vehicle. An obstacle detector disclosed in Patent Document 1 includes a sensor for detecting an obstacle and a position detection unit for detecting a position of the obstacle from a detection result of the sensor. The position detection unit detects the position of the obstacle that is present in a detectable area of the sensor. A stereo camera is used as the sensor. The position detection unit derives a disparity image from images captured by the stereo camera and detects the position of the obstacle based on the disparity image.

WO 2019/187937 A1 aims to suppress an increase in the range in which obstacle detection is not executable and prevent the false detection of a movable part as an obstacle. Proposed is a distance sensors provided in a work vehicle and capable of measuring the distance to a measurement target; an obstacle control unit that executes collision avoidance control upon detecting a measurement target within a predetermined distance as an obstacle based on measurement results from the distance sensors; a masking range setting unit that sets a masking range in which the detection of obstacles is not executed and the execution of the collision avoidance control is restricted; and a range-of-movement acquisition unit that acquires the range of movement of movable parts provided in the work vehicle, wherein the masking range setting unit sets the masking range corresponding to the range of movement.

NATIONAL INSTITUTE OF STANDARDS AND TECHNOLOGY: "Performance metrics for intelligent systems (PERMIS) workshop, 2010, NISTSP 1113-PERMIS", NATIONAL INSTITUTE OF STANDARDS AND TECHNOLOGY (NIST), 31 December 2010, pages 1-392 relate to advanced three-dimensional (3D) imaging sensors and their use in manufacturing towards improving forklift safety.

JP 2019 089636 A aims to provide a safety apparatus that prevents a positional relationship between a moving body and an obstacle from becoming unrecognizable. Proposed is folk lift that is mounted with a safety apparatus. The safety apparatus comprises two imaging apparatuses and an image processing apparatus. Each imaging apparatus is a stereo camera. The imaging apparatus is arranged such that an uppermost side of a vertical field angle is above a horizontal surface. The image processing apparatus calculates a position of an obstacle based on an image captured by the imaging apparatus. The image processing apparatus assumes the position of the obstacle when the obstacle is not captured by the imaging apparatus.

Citation List

Patent Document

Patent Document 1: Japanese Patent Application Publication No. 2016-206801

SUMMARY OF INVENTION

Technical Problem

A part of the moving body may be present in the detectable area of the sensor depending on an installation position of the sensor. When the moving body is present in the detectable area, the obstacle detector may detect the part of the moving body as the obstacle.

The present disclosure is directed to providing an obstacle detector and an obstacle detection method by which a part of a moving body is prevented from being detected as an obstacle.

Solution to Problem

The invention is set out in the appended set of claims..

Advantageous Effect of Invention

According to the present invention, the part of the moving body is prevented from being detected as the obstacle.

BRIEF DESCRIPTION OF DRAWINGS

FIG. 1 is a side view of a forklift according to a first embodiment.
FIG. 2 is a plan view of the forklift according to the first embodiment.
FIG. 3 is a configuration view schematically illustrating the forklift and an obstacle detector according to the first embodiment.
FIG. 4 is an example of a first image captured by a stereo camera.
FIG. 5 is a flowchart showing an obstacle detection process performed by a position detector.
FIG. 6 is an explanatory view for describing a detectable area, a non-detection area, and a detection area.
FIG. 7 is a schematic diagram illustrating positions of obstacles in an XY-plane of the world coordinate system.
FIG. 8 is a side view of a forklift according to a second embodiment.
FIG. 9 is an example of a first image captured by a stereo camera.

DESCRIPTION OF EMBODIMENTS

First Embodiment

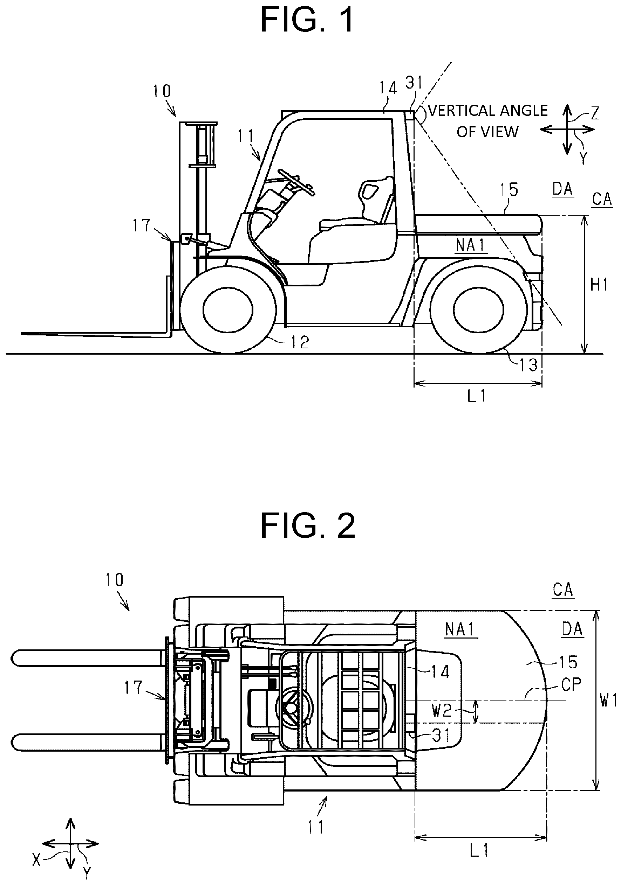

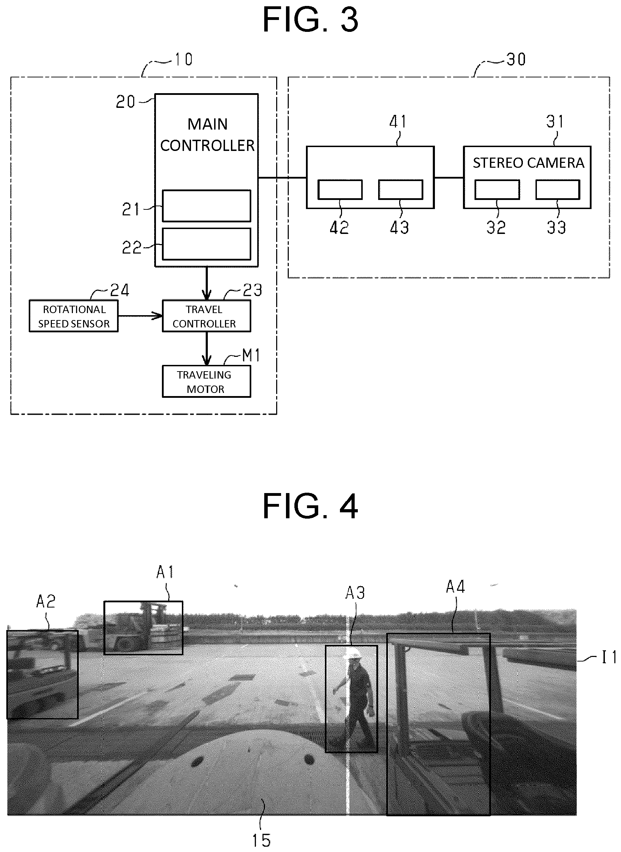

The following will describe a first embodiment of an obstacle detector and an obstacle detection method.
Referring to FIGS. 1 and 2, a forklift 10 as a moving body includes a vehicle body 11, driving wheels 12 that are disposed in a lower front portion of the vehicle body 11, steering wheels 13 that are disposed in a lower rear portion of the vehicle body 11, and a load handling apparatus 17. The vehicle body 11 has an overhead guard 14 that is provided at an upper portion of a driver's seat and a counterweight 15 that balances out a load loaded on the load handling apparatus 17. The counterweight 15 is mounted on a rear portion of the vehicle body 11. The forklift 10 may be a forklift that is operated by a driver, a forklift that operates automatically, or a forklift whose operation is switchable between a manual mode and an automatic mode. In the following description, right and left are determined based on a direction in which the forklift 10 moves forward.
Referring to FIG. 3, the forklift 10 includes a main controller 20, a traveling motor M1, a travel controller 23 that controls the traveling motor M1, and a rotational speed sensor 24. The main controller 20 performs controls in relation to a traveling operation and a load handling operation of the forklift 10. The main controller 20 includes a processor 21 and a memory 22. Examples of the processor 21 include a CPU: Central Processing Unit, a GPU: Graphics Processing Unit, and a DSP: Digital Signal Processor. The memory 22 includes a RAM: Random Access Memory and a ROM: Read Only Memory. The memory 22 stores programs for operating the forklift 10. This means that the memory 22 stores program codes or commands by which the processor 21 executes processes. The memory 22, that is, a computer-readable medium includes all sorts of usable media that are accessible by a general-purpose computer or a dedicated computer. The main controller 20 may be formed of hardware circuits such as an ASIC: Application Specific Integrated Circuit and an FPGA: Programmable Gate Array. The main controller 20, which is a processing circuit, may include one or more processors that are operable in accordance with programs, one or more hardware circuits such as the ASIC and the FPGA, or a combination of the processors and the hardware circuits.
The main controller 20 gives a command for a rotational speed of the traveling motor M1 to the travel controller 23 so that a vehicle speed of the forklift 10 reaches a target vehicle speed. The travel controller 23 of the present embodiment is a motor driver. The rotational speed sensor 24 outputs the rotational speed of the traveling motor M1 to the travel controller 23. The travel controller 23 controls the traveling motor M1 in accordance with the command from the main controller 20 so that the rotational speed of the traveling motor M1 coincides with a command value.
An obstacle detector 30 is mounted on the forklift 10. The obstacle detector 30 has a stereo camera 31 as a sensor and a position detector 41 that detects a position of an obstacle from images captured by the stereo camera 31. The stereo camera 31 is installed so as to capture an aerial view image of a road surface on which the forklift 10 travels from above the forklift 10. The stereo camera 31 of the present embodiment captures a rear of the forklift 10. Thus, the obstacle detected by the position detector 41 is located in the rear of the forklift 10.
Referring to FIG. 1, the stereo camera 31 is installed on, for example, the overhead guard 14. Referring to FIG. 2, the stereo camera 31 is installed at a position offset from a center position CP of the forklift 10 in a vehicle width direction thereof. In the present embodiment, the stereo camera 31 is installed at the position offset leftward from the center position CP of the forklift 10 in the vehicle width direction thereof.
The stereo camera 31 captures an imaging range that is defined by a horizontal angle of view and a vertical angle of view. The counterweight 15 is located inside the vertical angle of view. Accordingly, a portion of the counterweight 15 as a part of the forklift 10 is always present in the image captured by the stereo camera 31.
Referring to FIG. 3, the stereo camera 31 has a first camera 32 and a second camera 33. For example, a CCD image sensor and a CMOS image sensor are used as the first camera 32 and the second camera 33. The first camera 32 and the second camera 33 are arranged in such a manner that optical axes of the first camera 32 and the second camera 33 are in parallel with each other. In the present embodiment, the first camera 32 and the second camera 33 are horizontally arranged. When an image captured by the first camera 32 is defined as a first image and an image captured by the second camera 33 is defined as a second image, the same obstacle appears at laterally shifted positions in the first image and the second image. In detail, in a case in which the same obstacle is captured by the first camera 32 and the second camera 33, when comparing the obstacle captured in the first image with the obstacle captured in the second image, a lateral shift of pixels [px] corresponding to a distance between the first camera 32 and the second camera 33 is generated. The first image and the second image have the same pixel counts. For example, an image of VGA with 640 × 480 [px] resolutions is used as the first image and the second image. The first image and the second image are expressed by, for example, RGB signals.

The position detector 41 includes a processor 42 and a memory 43. Examples of the processor 42 include a CPU, a GPU, and a DSP. The memory 43 includes a RAM and a ROM. The memory 43 stores various programs for detecting an obstacle from the images captured by the stereo camera 31. This means that the memory 43 stores program codes or commands by which the processor 42 executes processes. The memory 43, that is, a computer-readable medium includes all sorts of usable media that are accessible by a general-purpose computer or a dedicated computer. The position detector 41 may be formed of hardware circuits such as an ASIC and an FPGA. The position detector 41, which is a processing circuit, may include one or more processors that are operable in accordance with programs, one or more hardware circuits such as the ASIC and the FPGA, or a combination of the processors and the hardware circuits.

The following will describe an obstacle detection process performed by the position detector 41 with an explanation of the obstacle detection method. The obstacle detection process is performed by the processor 42 which executes the programs stored in the memory 43. The obstacle detection process is performed repeatedly every specified control period.

The following will describe, as an example, the obstacle detection process in a case in which an environment shown in FIG. 4 is captured by the stereo camera 31. FIG. 4 is a first image I1 obtained by capturing the rear of the forklift 10. As can be seen from the first image I1, a person and obstacles other than a person are present in the rear of the forklift 10. A portion of the counterweight 15 is captured in the first image I1. It is noted that, for the convenience of explanation, coordinates of each obstacle present in the first image I1 are indicated by windows A1, A2, A3, and A4, but the windows A1, A2, A3, and A4 do not exist in the actual first image I1.

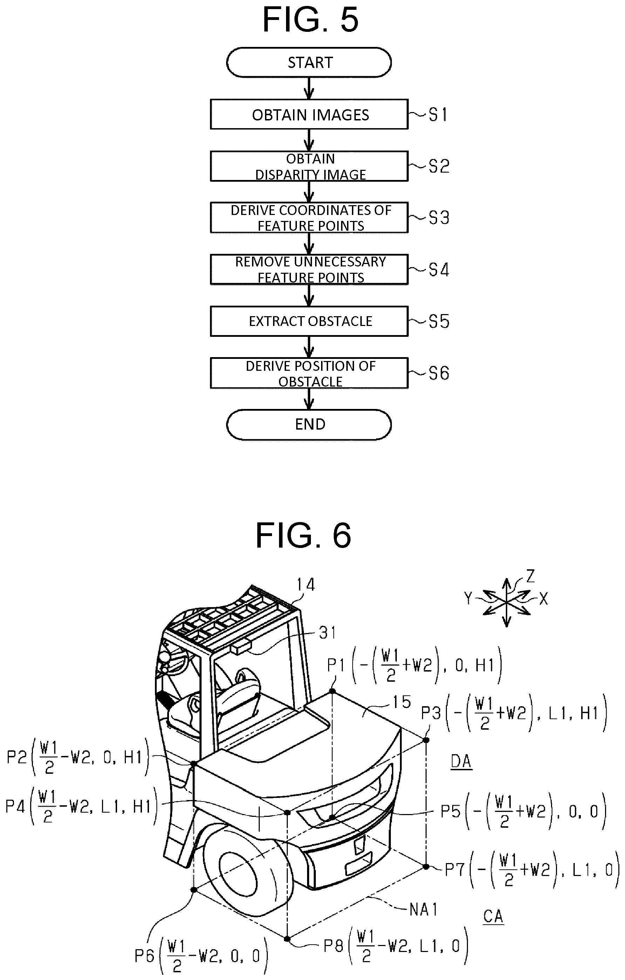

Referring to FIG. 5, at Step S1, the position detector 41 obtains the first image I1 and a second image of the same frame from a video captured by the stereo camera 31. The first image I1 and the second image correspond to detection results of the stereo camera 31.

Next, at Step S2, the position detector 41 obtains a disparity image by a stereo process. The disparity image is an image whose pixels [px] are correlated with a disparity. The disparity is obtained by comparing the first image I1 with the second image and calculating a difference in pixel counts between the first image I1 and the second image at each of identical feature points captured in the first image I1 and the second image. It is noted that the feature point is a visually recognizable point as a border such as an edge of an obstacle. The feature point may be detected by using information of brightness, and the like.

The position detector 41 converts from RGB to YCrCb by using a RAM which temporarily stores the images. It is noted that the position detector 41 may perform a distortion correction process, an edge enhancement process, and the like. The position detector 41 performs the stereo process in which the disparity is calculated by comparing similarities between the pixels of the first image I1 and the pixels of the second image. It is noted that a method that calculates the disparity in each pixel or a block matching method that divides each image into blocks including a plurality of pixels and calculates the disparity in each of the blocks may be used as the stereo process. The position detector 41 uses the first image I1 as a base image and the second image as a comparison image to obtain the disparity image. The position detector 41 extracts a pixel of the second image that is most similar to a pixel of the first image I1, for each pixel of the first image I1, and calculates a difference in pixel counts in the transverse direction of the images between the pixel of the first image I1 and the extracted pixel of the second image as the disparity. Thus, the disparity image in which the disparity is correlated with each pixel of the first image I1 as the base image may be obtained. The disparity image is not necessarily a visualized data, but may be data in which the disparity is correlated with each pixel of the disparity image. It is noted that the position detector 41 may perform a process in which a disparity of the road surface is removed in the disparity image.

Next, at Step S3, the position detector 41 derives coordinates of each of the feature points in a world coordinate system. Firstly, the position detector 41 derives coordinates of the feature point in a camera coordinate system. The camera coordinate system is a coordinate system in which a position of the stereo camera 31 is defined as an origin. The camera coordinate system is a three-axis orthogonal coordinate system in which an optical axis of a camera is set to a Z-axis and two axes orthogonal to the optical axis are set to an X-axis and Y-axis. The coordinates of the feature point in the camera coordinate system are represented by a Z-coordinate $Zc$, an X-coordinate $Xc$, and a Y-coordinate $Yc$. The Z-coordinate $Zc$, X-coordinate $Xc$, and Y-coordinate $Yc$ are derived by Equations 1 to 3 as described below.

[Equation 1]

$$Zc = \frac{B \times f}{d} \cdots (1)$$

[Equation 2]

$$Xc = (xp - x') \times \frac{Zc}{f} \cdots (2)$$

[Equation 3]

$$Yc = (yp - y') \times \frac{Zc}{f} \cdots (3)$$

In Equations 1 to 3, B represents a base line length [mm], f represents a focal length [mm], and d represents a disparity [px]. An arbitrary X-coordinate in the disparity image is represented by xp, and an X-coordinate of center coordinates of the disparity image is represented by x'. An arbitrary Y-coordinate in the disparity image is represented by yp, and a Y-coordinate of the center coordinates of the disparity image is represented by y'.

The coordinates of each of the feature points in the camera coordinate system are derived, wherein xp and yp represent respectively the X-coordinate and the Y-coordinate of the feature point in the disparity image, and d is the disparity correlated with the coordinates of the feature point.

Here, in a state where the forklift 10 is located on a horizontal plane, the three-axis orthogonal coordinate system having an X-axis extending in the vehicle width direction of the forklift 10 of the horizontal direction, a Y-axis extending in an orthogonal direction to the X-axis of the horizontal direction, and a Z-axis extending orthogonal to the X-axis and the Y-axis correspond to the world coordinate system which is a coordinate system of a real space. The Y-axis in the world coordinate system is also an axis extending in a front and rear direction of the forklift 10, that is, in a traveling direction of the forklift 10. The Z-axis in the world coordinate system is also an axis extending in the vertical direction. The coordinates of the feature point in the world coordinate system are represented by an X-coordinate Xw, a Y-coordinate Yw, and a Z-coordinate Zw in the world coordinate system.

The position detector 41 performs world coordinate transformation from camera coordinates to world coordinates by Equation 4 as described below. The world coordinates mean coordinates in the world coordinate system.

[Equation 4]

$$\begin{pmatrix} Xw \\ Yw \\ Zw \end{pmatrix} = \begin{pmatrix} 1 & 0 & 0 \\ 0 & \cos\theta & -\sin\theta \\ 0 & \sin\theta & \cos\theta \end{pmatrix} \begin{pmatrix} Xc \\ Yc \\ Zc \end{pmatrix} + \begin{pmatrix} 0 \\ 0 \\ H \end{pmatrix} \cdots (4)$$

In Equation 4, H is an installation height [mm] of the stereo camera 31 in the world coordinate system, and θ is an angle between the optical axis of the first camera 32 and a horizontal surface + 90° or an angle between the optical axis of the second camera 33 and the horizontal surface + 90°.

In the present embodiment, an origin in the world coordinate system corresponds to the coordinates in which the X-coordinate Xw and the Y-coordinate Yw represent the position of the stereo camera 31 and the Z-coordinate Zw represents the road surface. The position of the stereo camera 31 is, for example, a middle position between a lens of the first camera 32 and a lens of the second camera 33.

The X-coordinate Xw of the world coordinates obtained by the world coordinate transformation represents a distance from the origin to each of the feature points in the vehicle width direction of the forklift 10. The Y-coordinate Yw represents a distance from the origin to the feature point in the traveling direction of the forklift 10. The Z-coordinate Zw represents a height from the road surface to the feature point. The feature point is a point that represents a part of an obstacle. It is noted that an arrow X in FIGS. 2 and 6 represents an X-axis direction of the world coordinate system, an arrow Y in FIGS. 1, 2, 6, and 8 represents a Y-axis direction of the world coordinate system, and an arrow Z in FIGS. 1, 6, and 8 represents a Z-axis direction of the world coordinate system.

Referring to FIG. 6, an area in which the world coordinates of the feature points in the world coordinate system are obtained is defined as a detectable area CA in which an obstacle is detectable. The detectable area CA is determined by, for example, the imaging range of the stereo camera 31. The position detector 41 serves as a coordinates deriving unit by executing a process described in Step S3.

Here, a non-detection area NA1 is set in the detectable area CA of the stereo camera 31 in advance. The non-detection area NA1 is an area where it is determined that an obstacle is not present regardless of whether or not an obstacle is captured by the stereo camera 31. An area different from the non-detection area NA1 in the detectable area CA is defined as a detection area DA. The detection of an obstacle is performed on the detection area DA. Accordingly, the position detector 41 detects an obstacle when the obstacle is captured by the stereo camera 31 and the obstacle is present in the detection area DA.

Referring to FIG. 5, at Step S4, the position detector 41 recognizes that feature points in the non-detection area NA1 are unnecessary feature points, and removes the unnecessary feature points. The non-detection area NA1 is set, in the detectable area CA, to a position where a part of the forklift 10 is present. In the present embodiment, the non-detection area NA1 is set to the position where the counterweight 15 is present. The unnecessary feature points also correspond to the feature points generated by capturing the counterweight 15.

The feature points are derived from specifications of the vehicle. The specifications of the vehicle for deriving the unnecessary feature points are stored in, for example, the memory 43 of the position detector 41.

Referring to FIGS. 1 and 2, information that indicates a width W1 of the counterweight 15, a height H1 of the counterweight 15, a distance L1 in the front and rear direction of the forklift 10 from the stereo camera 31 to a rear end of the counterweight 15, and a distance W2 in the vehicle width direction of the forklift 10 between the center position CP of the forklift 10 and the stereo camera 31, is stored as the specifications of the vehicle.

The width W1 of the counterweight 15 is a measurement of the counterweight 15 in the vehicle width direction of the forklift 10. The width W1 of the counterweight 15 is also a measurement of the counterweight 15 in the X-axis direction of the world coordinate system. In the present embodiment, the counterweight 15 captured by the stereo camera 31 has a constant width. For this reason, the width W1 of the counterweight 15 is set to a constant value. When the width W1 of the counterweight 15 is not constant, the width W1 of the counterweight 15 associated with a position of the counterweight 15 in the front and rear direction of the forklift 10 may be stored. That is, the width of the counterweight 15 associated with the Y-coordinate Yw of the counterweight 15 is stored so as to obtain the width of the counterweight 15 even when the width of the counterweight 15 is not constant. Even when the width of the counterweight 15 is not constant, the width of the counterweight 15 may be also recognized to be constant. In this case, the maximum width of the counterweight 15 only needs to be recognized as the width of the counterweight 15.

The height H1 of the counterweight 15 is a measurement of the counterweight 15 from the road surface to an upper end of the counterweight 15. Since the origin of the Z-axis in the world coordinate system is located on the road surface, the height H1 of the counterweight 15 is also the Z-coordinate Zw of the upper end of the counterweight 15 in the world coordinate system. It is noted that in a case in which the height of the counterweight 15 varies according to the position of the counterweight 15 in the front and rear direction of the forklift 10 or in the vehicle width direction of the forklift 10, the highest portion of the counterweight 15 only needs to be defined as the upper end of the counterweight 15.

The distance L1 in the front and rear direction of the forklift 10 from the stereo camera 31 to the rear end of the counterweight 15 is a measurement in the Y-axis direction of the world coordinate system from the stereo camera 31 to the rear end of the counterweight 15. Since the origin of the Y-axis in the world coordinate system is located at the position of the stereo camera 31, the distance L1 from the stereo camera 31 to the rear end of the counterweight 15 is also the Y-coordinate Yw of the rear end of the counterweight 15 in the world coordinate system. It is noted that in a case in which a position of the rear end of the counterweight 15 varies according to the position of the counterweight 15 in the front and rear direction of the forklift 10 or in the vehicle width direction of the forklift 10, the rearmost portion of the counterweight 15 only needs to be defined as the rear end of the counterweight 15.

The distance W2 in the vehicle width direction of the forklift 10 between the center position CP of the forklift 10 and the stereo camera 31 is a measurement in the X-axis direction of the world coordinate system from the center position CP of the forklift 10 to the stereo camera 31. Since the origin of the X-axis in the world coordinate system is located at the position of the stereo camera 31, the distance W2 in the vehicle width direction from the center position CP of the forklift 10 to the stereo camera 31 is also the X-coordinate Xw of the center position CP of the forklift 10 in the world coordinate system.

The position detector 41 removes feature points that satisfy the following all of the first condition, the second condition, and the third condition out of the above-described specifications of the vehicle as the unnecessary feature points.

| First condition | $-(W1/2 + w2) \leq Xw \leq (W1/2 - W2)$ |
| Second condition | $0 \leq Yw \leq L1$ |
| Third condition | $0 \leq Zw \leq H1$ |

The first condition extracts feature points that are present in a range between opposite ends arranged in the X-axis direction of the world coordinate system and each separated away from the center position CP in the vehicle width direction of the forklift 10 by a half of the width W1 of the counterweight 15. In the present embodiment, since the center position CP of the forklift 10 and the origin of the X-axis in the world coordinate system are separated away from each other by the distance W2, the range of the X-coordinate Xw is offset by shifting the X-coordinate Xw to the right of the forklift 10 by the distance W2 so as to have the center position CP of the forklift 10 as reference.

The second condition extracts feature points that are present in a range from the stereo camera 31 to the rear end of the counterweight 15.

The third condition extracts feature points that are present in a range from the road surface to the upper end of the counterweight 15.

The conditions represent a range of three-dimensional coordinates in the world coordinate system. An area having a rectangular parallelepiped shape expressed by the range of the X-coordinate Xw from - (W1/2 + W2) to (W1/2 - W2), the range of the Y-coordinate Yw from 0 to L1, and the range of the Z-coordinate Zw from 0 to H1 is the non-detection area NA1, where the feature points present are removed. Removing the feature points that satisfy all of the first condition, the second condition, and the third condition means removing the feature points in the non-detection area NA1.

Referring to FIG. 6, the non-detection area NA1 is an area surrounded by points P1 to P8 in the world coordinate system. When the three-dimensional coordinates in the world coordinate system are expressed by the coordinates (Xw, Yw, Zw), the points P1, P2, P3, P4 are respectively expressed by coordinates (-(W1/2 + W2), 0, H1), coordinates (W1/2-W2, 0, H1), coordinates (- (W1/2 +W2), L1, H1), and coordinates (W1/2 - W2, L1, H1). Similarly to the points P1 to P4, the points P5, P6, P7, P8 are respectively expressed by coordinates (- (W1/2 + W2), 0, 0), coordinates (W1/2-W2, 0, 0), coordinates (- (W1/2 +W2), L1, 0), and coordinates (W1/2 - W2, L1, 0). The non-detection area NA1 is defined by the three-dimensional coordinates in the world coordinate system that represent the area in which the counterweight 15 is present.

It is noted that plus and minus signs of the world coordinates indicate which direction the coordinates are located relative to the origin of the world coordinate system, and may be set in each axis as desired. In the X-coordinate Xw, a coordinate located on the left relative to the origin has a plus sign and a coordinate located on the right relative to the origin has a minus sign. In the Y-coordinate Yw, a coordinate located on the rear relative to the origin has a plus sign and a coordinate located on the front relative to the origin has a minus sign. In the Z-coordinate Zw, a coordinate located on the upper relative to the origin has a plus sign and a coordinate located on the lower relative to the origin has a minus sign.

Referring to FIG. 5, at Step S5, the position detector 41 extracts each of the obstacles present in the world coordinate system. The position detector 41 defines a set of feature points of a plurality of feature points that represent a part of the obstacle as one point group, and extracts the point group as the obstacle, wherein it is assumed that each of the feature points in the point group represents the same obstacle. For example, the position detector 41 performs clustering. The clustering recognizes the feature points positioned in a specified range by the world coordinates of the feature points derived at Step S3 as one point group. The position detector 41 recognizes the clustered point group as one obstacle. At Step S4, since the feature points in the non-detection area NA1 are removed, the obstacle extracted at Step S5 is present in the detection area DA which is different from the non-detection area NA1. It is determined that the obstacle in the non-detection area NA1 is not present regardless of the detection result of the stereo camera 31, that is, regardless of the presence or absence of the obstacle in the non-detection area NA1. It is noted that the clustering of the feature points at Step S5 may be performed by various methods. That is, the clustering may be performed in any manner as long as the plurality of feature points are recognized as the obstacle by setting the feature points as one point group.

Next, at Step S6, the position detector 41 derives a position of each of the obstacles extracted at Step S5. In the present embodiment, the position of the obstacle means coordinates of the obstacle in an XY-plane of the world coordinate system. The position detector 41 recognizes the world coordinates of the obstacle based on the world coordinates of the feature points configuring the clustered point group. For example, the position detector 41 may define the X-coordinates Xw, the Y-coordinates Yw, and the Z-coordinates Zw of the plurality of feature points positioned in an end of the clustered point group as the X-coordinate Xw, the Y-coordinate Yw, and the Z-coordinate Zw of the obstacle, or define the X-coordinate Xw, the Y-coordinate Yw, and the Z-coordinate Zw of the feature point that is a center of the point group as the X-coordinate Xw, Y-coordinate Yw, and the Z-coordinate Zw of the obstacle. That is, the coordinates of the obstacle in the world coordinate system may represent the whole obstacle, or a point of the obstacle.

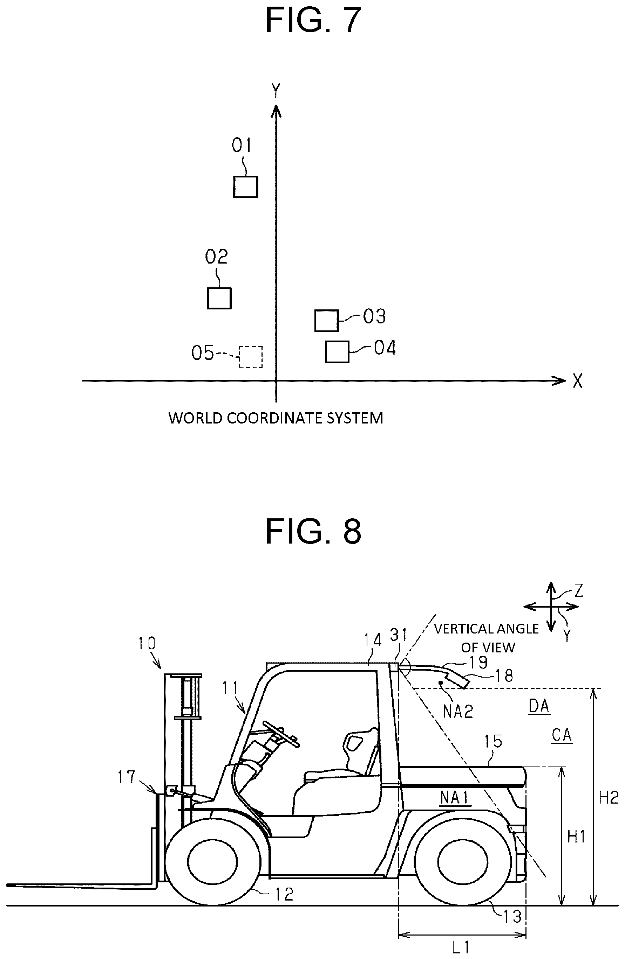

Referring to FIG. 7, the position detector 41 projects the X-coordinate Xw, the Y-coordinate Yw, and the Z-coordinate Zw of the obstacle on the XY- plane of the world coordinate system, thereby deriving the X-coordinate Xw and the Y-coordinate Yw of the obstacle in the XY-plane of the world coordinate system. That is, the position detector 41 derives the X-coordinate Xw and the Y-coordinate Yw of the obstacle in the horizontal direction by removing the Z-coordinate Zw from the X-coordinate Xw, the Y-coordinate Yw, and the Z-coordinate Zw of the obstacle.

Obstacles O1 to O4 illustrated in FIG. 7 are obstacles detected from the first image I1 and the second image by executing the processes at Steps S1 to S6. The obstacle O1 is the obstacle that is present in the window A1. The obstacle O2 is the obstacle that is present in the window A2. The obstacle O3 is the obstacle that is present in the window A3. The obstacle O4 is the obstacle that is present in the window A4.

If the feature points present in the non-detection area NA1 are not removed, the position detector 41 extracts an obstacle O5 corresponding to the counterweight 15. In the present embodiment, the feature points present in the non-detection area NA1 are removed and it is determined that the obstacle is not present in the non-detection area NA1, thereby preventing the obstacle O5 from being detected. The position detector 41 serves as a non-detection unit by executing the process described in Step S4. The position detector 41 serves as a detection unit by executing the processes described in Steps S5 and S6. The position detector 41 serves as a position detection unit.

It is noted that the "removing the feature points" at Step S4 means not using the feature points present in the non-detection area NA1 for extracting each of the obstacles at Step S5. That is, "removing the feature points" includes not only an aspect in which the world coordinates of the feature points present in the non-detection area NA1 are removed from the RAM of the position detector 41 but also an aspect in which the feature points in the non-detection area NA1 are not used for extracting the obstacle without removing the world coordinates of the feature points present in the non-detection area NA1 from the RAM of the position detector 41.

A positional relationship between the forklift 10 and each of the obstacles in the horizontal direction is obtained by the obstacle detection process of the position detector 41. The main controller 20 obtains the positional relationship between the forklift 10 and the obstacle in the horizontal direction by acquiring a detection result from the position detector 41. The main controller 20 performs a control in accordance with the positional relationship between the forklift 10 and the obstacle. For example, the main controller 20 limits the vehicle speed of the forklift 10 and issues an alert when a distance between the forklift 10 and the obstacle is less than a threshold value.

The following will describe operations according to the first embodiment.

The non-detection area NA1 is set in the detectable area CA in advance. The position detector 41 removes the feature points present in the non-detection area NA1. With this operation, the position detector 41 determines that the obstacle is not present in the non-detection area NA1 even when the obstacle is actually present in the non-detection area NA1. The non-detection area NA1 is the area in which the counterweight 15 is present. Since a positional relationship between the stereo camera 31 and the counterweight 15 is fixed, the counterweight 15 is always present in the imaging range of the stereo camera 31.

When the main controller 20 limits the vehicle speed of the forklift 10 and issues the alert in accordance with the distance between the forklift 10 and the obstacle, the detection of the counterweight 15 as the obstacle may trigger the limit of the vehicle speed and issue the alert. The counterweight 15 is always present in the detectable area CA, so that the limit of the vehicle speed and the alert may be always caused. This may deteriorate work efficiency of the forklift 10. In addition, the alert issued at all times may make it impossible to determine whether or not the forklift 10 is close to the obstacle .

In contrast, the counterweight 15 is not detected as the obstacle in the first embodiment, so that the control of the vehicle speed and the alert caused by capturing of the counterweight 15 by the stereo camera 31 are prevented.

The following will describe advantages according to the first embodiment.

(1-1) The non-detection area NA1 is set in the detectable area CA of the stereo camera 31 in advance. The position detector 41 removes the feature points present in the non-detection area NA1, with the result that the position detector 41 determines that the obstacle is not present in the non-detection area NA1. This prevents the counterweight 15 present in the non-detection area NA1 from being detected as the obstacle.

(1-2) In the forklift 10, the counterweight 15 is disposed in the rear portion of the vehicle body 11 so as to balance out a load loaded on the load handling apparatus 17 in weight. For this reason, the counterweight 15 is easy to be present in the detectable area CA of the stereo camera 31 that captures the rear of the forklift 10. In addition, in some cases, it is difficult to dispose the stereo camera 31 in such a manner that the counterweight 15 is not present in the detectable area CA. When the area in which the counterweight 15 is present is set as the non-detection area NA1, even when the counterweight 15 is present in the detectable area CA of the stereo camera 31, the obstacles in the detection area DA are detected while the counterweight 15 is prevented from being detected as the obstacle.

(1-3) The non-detection area NA1 is defined by the three-dimensional coordinates in the world coordinate system. It is possible to define the non-detection area NA1 by the X-coordinate Xw and the Y-coordinate Yw of the world coordinate system, and remove the feature points present in the non-detection area NA1 regardless of the Z-coordinate Zw. In this case, even when an obstacle is placed on the counterweight 15, the obstacle is also present in the non-detection area NA1. Accordingly, even when the obstacle is placed on the counterweight 15, the obstacle is recognized as not present. The object placed on the counterweight 15 is detected by defining the non-detection area NA1 by the three-dimensional coordinates.

(1-4) The non-detection area NA1 is the area set in advance. In a case a movable member of the moving body may enter the detectable area CA with its movement and detection of such part of the moving body needs to be prevented, the position detector 41 needs to set an area where the movable member is present as the non-detection area. The non-detection area cannot be set in advance because of the moving of the movable body. The position detector 41 needs to detect a position of the movable member and set the position as the non-detection area. In contrast, in the present embodiment, the non-detection area NA1 is set so as to correspond to the counterweight 15 whose positional relationship with the stereo camera 31 is fixed. Since the position of the counterweight 15 in the detectable area CA is fixed, it is possible to set the non-detection area NA1 in advance. Compared with the case in which the non-detection area is set so as to correspond to a detected position of the movable member, a processing load of the position detector 41 is reduced.

(1-5) The obstacle detector 30 performs the obstacle detection method, so that the obstacle in the non-detection area NA1 is recognized as not present. This prevents the counterweight 15 present in the non-detection area NA1 from being detected as the obstacle.

Second Embodiment

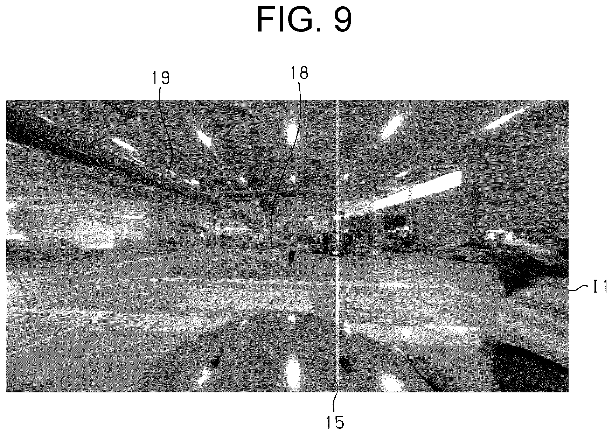

The following will describe an obstacle detector and an obstacle detection method of a second embodiment. Detailed descriptions for similar portions to those of the first embodiment are omitted in the following description.
Referring to FIG. 8, the forklift 10 includes a mirror 18 and a holding portion 19 that holds the mirror 18. The holding portion 19 extends toward the rear of the vehicle body 11. The mirror 18 and the holding portion 19 are located inside the vertical angle of view of the stereo camera 31. Each of the mirror 18 and the holding portion 19 is a part of the forklift 10.
As shown in FIG. 9, the mirror 18 and the holding portion 19 are present in the first image I1 captured by the stereo camera 31. In the second embodiment, the obstacle detection process is performed so as not to detect the mirror 18 and the holding portion 19 as well as the counterweight 15 as the obstacle.
Referring to FIG. 8, the memory 43 of the position detector 41 stores a height H2 of the mirror 18 as the specifications of the vehicle. The height H2 of the mirror 18 is a measurement from the road surface to a lower end of the mirror 18. Since the origin of the Z-axis in the world coordinate system is located on the road surface, the height H2 of the mirror 18 is also the Z-coordinate $Zw$ of the lower end of the mirror 18 in the world coordinate system. It is noted that the holding portion 19 is disposed above the lower end of the mirror 18 across the entire length of the holding portion 19.
Changing the third condition in the first embodiment as described below makes it possible that the position detector 41 removes feature points generated by the mirror 18 and the holding portion 19 as well as the feature points generated by the counterweight 15 as the unnecessary feature points. The position detector 41 recognizes that feature points that satisfy the following all of the first condition, the second condition, and the third condition are unnecessary feature points, and removes the unnecessary feature points.
Third condition $0 \leq Zw \leq H1$ or $Zw \geq H2$
$Zw \geq H2$ is added as an OR condition to the third condition in the first embodiment. Accordingly, both of the feature points that satisfy the first condition, the second condition, and $0 \leq Zw \leq H1$ of the third condition and the feature points that satisfy the first condition, second condition, and $Zw \geq H2$ of the third condition are removed as the unnecessary feature points. A non-detection area NA2 that is defined by the first condition, the second condition, and $Zw \geq H2$ of the third condition is an area expressed by a range of the X-coordinate $Xw$ from $-(W1/2 + W2)$ to $(W1/2 - W2)$, the range of the Y-coordinate $Yw$ from 0 to L1, and a range of the Z-coordinate $Zw$ equal or greater than H2.
It is determined that the mirror 18 and the holding portion 19 are not the obstacle by changing the third condition into the above-described condition. It is noted that as to the X-coordinate $Xw$ and the Y-coordinate $Yw$, the feature points present in a range which is the same as that of the counterweight 15 are removed, because the first condition and the second condition in the second embodiment are the same as those in the first embodiment. Depending on the size of the mirror 18 and the holding portion 19, a range of the X-coordinate $Xw$ and a range of the Y-coordinate $Yw$ of the non-detection area NA2 may be excessive or insufficient with respect to the mirror 18 and the holding portion 19. In this case, the conditions may be set individually in each of the non-detection area NA1 for the counterweight 15 and the non-detection area NA2 for the mirror 18 and the holding portion 19.
The following will describe an advantage according to the second embodiment.
(2-1) It is prevented that the mirror 18 and the holding portion 19 as well as the counterweight 15 are detected as the obstacle. Even when a plurality of members are present in the detectable area CA, the non-detection areas NA1, NA2 are set for the plurality of members, thereby detecting the obstacle in the detection area DA without recognizing the plurality of members as the obstacle.
The embodiments may be modified as follows. The embodiments and the following modifications may be combined with each other, as long as there is no technical contradictions.
In the embodiments, the non-detection area NA1 may be defined by two-dimensional coordinates that represent coordinates in the XY-plane of the world coordinate system. That is, the third condition in the embodiments may be deleted and the feature points that satisfy the first condition and the second condition may be removed. In this case, regardless of the Z-coordinate $Zw$, the feature points present in the non-detection area defined by the X-coordinate $Xw$ and the Y-coordinate Yw are removed as the unnecessary feature points.

In the embodiments, the position of each of the obstacles derived at Step S6 may be represented by the three-dimensional coordinates in the world coordinate system. This means that the position detector 41 does not need to project the obstacle on the XY-plane of the world coordinate system.

In the embodiments, the obstacle detector 30 may have a sensor obtaining the three-dimensional coordinates in the world coordinate system other than the stereo camera 31 as the sensor. Examples of these kinds of sensors include a LIDAR: Laser Imaging Detection and Ranging, a millimeter wave radar, and a TOF: Time of Flight camera. The LIDAR is a distance meter that recognizes a surrounding environment by emitting a laser while changing an irradiation angle and receiving a reflected light which is reflected from an irradiation point of the laser. The millimeter wave radar recognizes the surrounding environment by emitting a radio wave with a specified frequency band to the surroundings. The TOF camera includes a camera and a light source emitting a light. The TOF camera derives, from a round trip time of the light emitted from the light source, a distance in a depth direction of the image in each pixel of the image captured by the camera. A combination of the above-described sensors may be used as the sensor.

In the embodiments, the obstacle detector 30 may have a two-dimensional LIDAR as the sensor that emits a laser while changing an irradiation angle relative to the horizontal direction. The LIDAR emits the laser within an irradiable angle of the LIDAR while changing the irradiation angle. The irradiable angle is, for example, 270 degrees relative to the horizontal direction. The detectable area CA of the two-dimensional LIDAR is a range defined by the irradiable angle and a measurable distance. When a point on which the laser beam is hit is defined as an irradiation point, the two-dimensional LIDAR measures a distance to the irradiation point by associating the distance with the irradiation angle. This means that the two-dimensional LIDAR measures two-dimensional coordinates of the irradiation point as a reference of an origin which is located at a position of the two-dimensional LIDAR. The two-dimensional coordinates measured by the two-dimensional LIDAR are coordinates of the world coordinate system in which one direction of the horizontal direction is set to an X-axis and another direction of the horizontal direction orthogonal to the X-axis is set to a Y-axis. In this case, the non-detection area is defined by the two-dimensional coordinates.

In the embodiments, an installation position of the stereo camera 31 may be modified as required. The stereo camera 31 may be installed at, for example, the center position CP. In this case, the origin of the X-axis in the world coordinate system coincides with the center position CP, so that the first condition is modified as follows.

First condition    $-W1/2 \leq Xw \leq W1/2$

Thus, when a coordinate axis in the world coordinate system is changed from the coordinate axis in the embodiments due to a change of the installation position of the stereo camera 31, or the like, the conditions are modified in accordance with this change.

In the embodiments, the non-detection area may be set to the image captured by the stereo camera 31. When using the first image I1 as an example for explanation, the coordinates in which the counterweight 15 is present in the first image I1 are obtained in advance from the installation position and an installation angle of the stereo camera 31. The coordinates in which the counterweight 15 is present in the first image I1 are set as the non-detection area so that a disparity is not calculated with respect to the non-detection area. The non-detection area only needs to be set to at least one of the first image I1 and the second image. Feature points are not obtained at a position at which the counterweight 15 is present in the image. Thus, the same advantages as those of the embodiments are obtained. Similar to the counterweight 15, the coordinates in which the mirror 18 and the holding portion 19 are present in the image are also set as the non-detection area. When the non-detection area is set to the image, the detectable area CA is a range shown in the image that is captured by the stereo camera 31. In detail, the detectable area CA is a range in which a disparity image is obtainable from the images captured by the stereo camera 31.

In the embodiments, the non-detection areas NA1, NA2 only need to include an area in which a part of the forklift 10 is present, and may be a larger area than that in which the part of the forklift 10 is present. That is, the non-detection areas NA1, NA2 may include a margin area.

In the embodiments, the position detector 41 may determine whether or not the obstacle is present in the non-detection area NA1 after extracting each of the obstacles by clustering the feature points at Step S5. The position detector 41 recognizes the obstacle in the non-detection area NA1 as not present. The position detector 41 may recognize an obstacle extending across a border of the non-detection area NA1 as being present in the non-detection area NA1 or as being present outside the non-detection area NA1. When the obstacle extends across the border of the non-detection area NA1, the position detector 41 may recognize only a portion of the obstacle that is present outside the non-detection area NA1 as the obstacle.

In the embodiments, the whole of the detectable area CA excluding the non-detection areas NA1, NA2 may be set as the detection area DA, or a part of the detectable area CA excluding the non-detection areas NA1, NA2 may be set as the detection area DA.

In the embodiments, subsequently to executing the process described in Step S6, the position detector 41 may perform a process in which it is determined whether each of the detected obstacles is a person or an object other than a person. The determination of whether or not the object is a person is performed by various methods. For example, the position detector 41 performs a person detection process on an image captured by either one of two of the camera 32 and the camera 33 of the stereo camera 31 to determine whether the obstacle is a person or an object other than a person. The position detector 41 transforms the coordinates of the obstacle in the world coordinate system which are obtained at Step S6 into camera coordinates, and then, transforms the camera coordinates into coordinates of the image captured by the camera 32 or the camera 33. For example, the position detector 41 transforms the coordinates of the obstacle in the world coordinate system into coordinates in the first image I1. The position detector 41 performs the person detection process on the coordinates of the obstacle in the first image I1. The person detection process is, for example, performed using feature extraction and a person determination unit that has performed a machine learning operation in advance. A method of the feature extraction is used, wherein features in a local area of an image, for example, HOG: Histogram of Oriented Gradients features and Haar-Like features, are extracted. An example of the person determination unit includes one which has performed a machine learning operation by a supervised learning model. For example, the supervised learning model having an algorithm such as a support vector machine, a neural network, naive Bayes, deep learning, and a decision tree is employed. Training data used for the machine learning operation include unique image components such as shape elements of a person extracted from an image and appearance elements. The shape elements include, for example, a size and an outline of a person. The appearance elements include, for example, light source information, texture information, and camera information. The light source information includes information about a reflection rate, shade, and the like. The texture information includes color information, and the like. The camera information includes image quality, an image resolution, an angle of view, and the like.

The person detection process takes a long time. Hence, when detecting a person in the image, coordinates in which an obstacle is present are identified, and then, the person detection process is performed on the identified coordinates. Performing the person detection process on the specified coordinates shortens the time required for the person detection process compared to performing the person detection process on the whole area of the image. A part of the forklift 10 such as the counterweight 15 is not determined as the obstacle, so that the person detection process is not performed on the coordinates in which the part of the forklift 10 is present in the image. Accordingly, processing time required for the person detection process is short, as compared to a case in which the part of the forklift 10 is detected as the obstacle and the person detection process is performed on the coordinates in which the obstacle is present.

In the embodiments, the whole of the counterweight 15 located in a rear of the stereo camera 31 is set as the non-detection area NA1. However, the non-detection area NA1 may be set while the area captured by the stereo camera 31 is taken into consideration. As can be seen from FIGS. 1 and 2, depending on the installation position and the vertical angle of view of the stereo camera 31, even the counterweight 15 that is located in the rear of the stereo camera 31 may have a portion which is not present in the imaging range of the stereo camera 31. Accordingly, the non-detection area NA1 does not need to include the portion of the counterweight 15 which is not present in the imaging range of the stereo camera 31. For example, when the second condition is set as shown in the embodiments, a lower limit of the Y-coordinate Yw of the second condition may be set to a value more than 0.

In the embodiments, the memory 43 of the position detector 41 may store the coordinates which define the non-detection area instead of the specifications of the vehicle. As to the non-detection area NA1, the memory 43 only needs to store the points P1 to P8.

In the embodiments, the obstacle detector 30 may detect an obstacle that is located in front of the forklift 10. In this case, the stereo camera 31 is disposed in such a manner that the stereo camera 31 captures a front of the forklift 10. Even when the stereo camera 31 captures the front of the forklift 10, a part of the forklift 10 may be present in the detectable area CA of the stereo camera 31 depending on the installation position of the stereo camera 31. The non-detection area is set according to a portion of the forklift 10 that is present in the detectable area CA. In addition, the obstacle detector 30 may detect obstacles in both of the front and the rear of the forklift 10. In this case, two stereo cameras 31 are disposed. One of the stereo cameras 31 captures the front of the forklift 10, and the other of the stereo cameras 31 captures the rear of the forklift 10.

In the embodiments, the world coordinate system is not limited to an orthogonal coordinate system, and may be a polar coordinate system.

In the embodiments, the position detection unit may be formed of a plurality of devices. For example, the position detection unit may include a device serving as the non-detection unit, a device serving as the detection unit, and a device serving as the coordinates deriving unit as separate devices.

In the embodiments, the transformation from the camera coordinates into the world coordinates may be performed by using table data. As the table data, table data in which the Y-coordinate Yw is correlated with a combination of the Y-coordinate Yc and the Z-coordinate Zc, and table data in which the Z-coordinate Zw is correlated with a combination of the Y-coordinate Yc and the Z-coordinate Zc are used. The Y-coordinate Yw and the Z-coordinate Zw in the world coordinate system are obtained from the Y-coordinate Yc and the Z-coordinate Zc in the camera coordinate system by storing the table data in the memory 43 of the position detector 41, and the like. It is noted that in the embodiments, table data for deriving the X-coordinate Xw is not stored because the X-coordinate Xc in the camera coordinate system coincides with the X-coordinate Xw in the world coordinate system.

In the embodiments, the first camera 32 and the second camera 33 may be vertically arranged.

In the embodiments, the obstacle detector 30 may include an auxiliary storage configured to store various pieces of information such as the information stored in the memory 43 of the position detector 41. Examples of the auxiliary storage include non-volatile storages such as a hard disc drive, a solid state drive, and an EEPROM: Electrically Erasable Programmable Read Only Memory, in which data is rewritable.

In the embodiments, the stereo camera 31 may include three or more cameras.

In the embodiments, the stereo camera 31 may be installed at any position such as the load handling apparatus 17.

In the embodiments, the forklift 10 may travel by driving an engine. In this case, the travel controller controls an amount of fuel injection to the engine, and the like.

In the embodiments, a part of the forklift 10 may be any member other than the counterweight 15, the mirror 18, and the holding portion 19, as long as the member belongs to the forklift 10 and is present in the detectable area CA.

In the embodiments, the obstacle detector 30 may be mounted on various moving bodies such as industrial vehicles other than the forklift 10, a passenger vehicle, and a flying body, wherein the industrial vehicles other than the forklift include a construction machine, an automated guided vehicle, and a truck.

Reference Signs List

CA detectable area
DA detection area
NA1, NA2 non-detection area
10 forklift as a moving body
15 counterweight as a part of a forklift
18 mirror as a part of a forklift
19 holding portion as a part of a forklift
30 obstacle detector
31 stereo camera as a sensor.
41 position detector as a position detection unit, a non-detection unit, a detection unit, and a coordinates deriving unit

**Claims**

1. An obstacle detector (30) for being mounted on a moving body (10) comprising:

   a sensor (31) configured to capture a detection result of an environment, wherein a portion of the moving body (10) is captured in the detection result, and to detect an obstacle; and
   a position detection unit (41) configured to detect a position of the obstacle from the detection result of the sensor (31), **characterized in that**
   the position detection unit (41) includes

   a coordinates deriving unit configured to derive coordinates of the obstacle in a coordinate system of the environment, wherein the coordinate system has an X-axis extending in one direction of a horizontal direction, a Y-axis extending in an orthogonal direction to the X-axis of the horizontal direction, and a Z-axis extending orthogonal to the X-axis and the Y-axis,
   a non-detection unit configured to determine that the obstacle is not present, regardless of the detection result of the sensor (31), in a non-detection area (NA1, NA2) that is defined by three-dimensional coordinates which represent an area in which the portion of the moving body (10) is present in the coordinate system of the environment and that is set in advance in a detectable area (CA) where the obstacle is detectable by the sensor (31), and
   a detection unit configured to detect the position of the obstacle present in a detection area (DA) in the detectable area (CA), other than the non-detection area (NA1, NA2).

2. The obstacle detector (30) according to claim 1, **characterized in that**

the moving body (10) is a forklift, and
the non-detection area (NA1, NA2) is set to a position at which a counterweight (15) of the forklift is present.

3. An obstacle detection method of detecting a position of an obstacle by an obstacle detector (30) that includes a sensor (31) and a position detection unit (41) and is mounted on a moving body (10), the obstacle detection method comprising:

a step in which the position detection unit (41) obtains a detection result of an environment captured by the sensor (31), wherein a portion of the moving body (10) is captured in the detection result;
a step in which coordinates of the obstacle in a coordinate system of the environment are derived, wherein the coordinate system has an X-axis extending in one direction of a horizontal direction, a Y-axis extending in an orthogonal direction to the X-axis of the horizontal direction, and a Z-axis extending orthogonal to the X-axis and the Y-axis;
a step in which the position detection unit (41) determines that the obstacle is not present, regardless of the detection result of the sensor (31), in a non-detection area (NA1, NA2) that is defined by three-dimensional coordinates which represent an area in which the portion of the moving body (10) is present in the coordinate system of the environment and that is set in advance in a detectable area (CA) where the obstacle is detectable by the sensor (31); and
a step in which the position detection unit (41) detects the position of the obstacle present in a detection area (DA) in the detectable area (CA), other than the non-detection area (NA1, NA2).

**Patentansprüche**

1. Hindernisdetektor (30) zur Montage an einem beweglichen Körper (10) umfassend:

einen Sensor (31), der so konfiguriert ist, dass er ein Detektionsergebnis einer Umgebung erfasst, wobei ein Abschnitt des beweglichen Körpers (10) in dem Detektionsergebnis erfasst wird, und ein Hindernis detektiert; und
eine Positionsdetektionseinheit (41), die so konfiguriert ist, dass sie eine Position des Hindernisses aus dem Detektionsergebnis des Sensors
(31) detektiert, **dadurch gekennzeichnet, dass**
die Positionsdetektionseinheit (41) Folgendes einschließt:

eine Koordinatenableitungseinheit, die so konfiguriert ist, dass sie Koordinaten des Hindernisses in einem Koordinatensystem der Umgebung ableitet, wobei das Koordinatensystem eine X-Achse aufweist, die sich in eine Richtung einer horizontalen Richtung erstreckt, eine Y-Achse, die sich in einer orthogonalen Richtung zur X-Achse der horizontalen Richtung erstreckt, und eine Z-Achse, die sich orthogonal zur X-Achse und Y-Achse erstreckt,
eine Nichtdetektionseinheit, die so konfiguriert ist, dass sie bestimmt, dass das Hindernis nicht vorhanden ist, unabhängig vom Detektionsergebnis des Sensors (31), in einem Nichtdetektionsbereich (NA1, NA2), der durch dreidimensionale Koordinaten definiert ist, die einen Bereich darstellen, in dem der Abschnitt des beweglichen Körpers (10) in dem Koordinatensystem der Umgebung vorhanden ist und der im Voraus in einem detektierbaren Bereich (CA) eingestellt ist, in dem das Hindernis durch den Sensor (31) detektierbar ist, und
eine Detektionseinheit, die so konfiguriert ist, dass sie die Position des in einem Detektionsbereich (DA) in dem detektierbaren Bereich (CA) vorhandenen Hindernisses, ausgenommen im Nichtdetektionsbereich (NA1, NA2), detektiert

2. Hindernisdetektor (30) nach Anspruch 1, **dadurch gekennzeichnet, dass**

der bewegliche Körper (10) ein Gabelstapler ist, und
der Nichtdetektionsbereich (NA1, NA2) auf eine Position eingestellt ist, an der ein Gegengewicht (15) des Gabelstaplers vorhanden ist.

3. Hindernisdetektionsverfahren zum Detektieren einer Position eines Hindernisses durch einen Hindernisdetektor (30), der einen Sensor (31) und eine Positionsdetektionseinheit (41) einschließt und an einem beweglichen Körper (10) montiert ist, wobei das Hindernisdetektionsverfahren Folgendes umfasst:

einen Schritt, in dem die Positionsdetektionseinheit (41) ein Detektionsergebnis einer vom Sensor (31) erfassten Umgebung erhält, wobei ein Abschnitt des beweglichen Körpers (10) in dem Detektionsergebnis erfasst wird;
einen Schritt, in dem Koordinaten des Hindernisses in einem Koordinatensystem der Umgebung abgeleitet werden, wobei das Koordinatensystem eine X-Achse aufweist, die sich in einer Richtung einer horizontalen Richtung erstreckt, eine Y-Achse, die sich in einer orthogonalen Richtung zur X-Achse der horizontalen Richtung erstreckt, und eine Z-Achse, die sich orthogonal zur X-Achse und Y-Achse erstreckt;
einen Schritt, in dem die Positionsdetektionseinheit (41) bestimmt, dass das Hindernis nicht vorhanden ist, unabhängig vom Detektionsergebnis des Sensors (31), in einem Nichtdetektionsbereich (NA1, NA2), der durch dreidimensionale Koordinaten definiert ist, die einen Bereich darstellen, in dem der Abschnitt des beweglichen Körpers (10) in dem Koordinatensystem der Umgebung vorhanden ist und der im Voraus in einem detektierbaren Bereich (CA) eingestellt ist, in dem das Hindernis durch den Sensor (31) detektierbar ist; und
einen Schritt, in dem die Positionsdetektionseinheit (41) die Position des in einem Detektionsbereich (DA) in dem detektierbaren Bereich (CA) vorhandenen Hindernisses, ausgenommen im Nichtdetektionsbereich (NA1, NA2), detektiert.

## Revendications

1. Détecteur d'obstacle (30) destiné à être monté sur un corps mobile (10) comprenant :

   un capteur (31) configuré pour capturer un résultat de détection d'un environnement, dans lequel une partie du corps mobile (10) est capturée dans le résultat de détection, et pour détecter un obstacle ; et
   une unité de détection de position (41) configurée pour détecter une position de l'obstacle à partir du résultat de détection du capteur
   (31), **caractérisé en ce que**
   l'unité de détection de position (41) inclut

   une unité de détermination de coordonnées configurée pour déterminer des coordonnées de l'obstacle dans un système de coordonnées de l'environnement, dans lequel le système de coordonnées présente un axe X s'étendant dans une direction d'une direction horizontale, un axe Y s'étendant dans une direction orthogonale à l'axe X de la direction horizontale, et un axe Z s'étendant dans une direction orthogonale à l'axe X et à l'axe Y,
   une unité de non-détection configurée pour déterminer que l'obstacle n'est pas présent, indépendamment du résultat de détection du capteur (31), dans une zone de non-détection (NA1, NA2) qui est définie par des coordonnées tridimensionnelles,
   lesquelles représentent une zone dans laquelle la partie du corps mobile (10) est présente dans le système de coordonnées de l'environnement et qui est réglée à l'avance dans une zone détectable (CA) où l'obstacle est détectable par le capteur (31), et
   une unité de détection configurée pour détecter la position de l'obstacle présent dans une zone de détection (DA) dans la zone détectable (CA), autre que la zone de non-détection (NA1, NA2)

2. Détecteur d'obstacle (30) selon la revendication 1, **caractérisé en ce que** le corps mobile (10) est un chariot élévateur, et
   la zone de non-détection (NA1, NA2) est réglée au niveau d'une position à laquelle un contrepoids (15) du chariot élévateur est présent.

3. Procédé de détection d'obstacle de détection d'une position d'un obstacle par un détecteur d'obstacle (30) qui inclut un capteur
   (31) et une unité de détection de position (41) et est monté sur un corps mobile (10), le procédé de détection d'obstacle comprenant :

   une étape dans laquelle l'unité de détection de position (41) obtient un résultat de détection d'un environnement capturé par le capteur (31) dans lequel une partie du corps mobile (10) est capturée dans le résultat de détection ;
   une étape dans laquelle des coordonnées de l'obstacle dans un système de coordonnées de l'environnement sont déterminées, dans lequel le système de coordonnées présente un axe X s'étendant dans une direction d'une direction horizontale, un axe Y s'étendant dans une direction orthogonale à l'axe X de la direction horizontale, et un axe Z s'étendant orthogonal à l'axe X et à l'axe Y ;

une étape dans laquelle l'unité de détection de position (41) détermine que l'obstacle n'est pas présent, indépendamment du résultat de détection du capteur (31), dans une zone de non-détection (NA1, NA2) qui est définie par des coordonnées tridimensionnelles, lesquelles représentent une zone dans laquelle la partie du corps mobile (10) est présente dans le système de coordonnées de l'environnement et qui est réglée à l'avance dans une zone détectable (CA) où l'obstacle est détectable par le capteur (31) ; et,

une étape dans laquelle l'unité de détection de position (41) détecte la position de l'obstacle présent dans une zone de détection (DA) dans la zone détectable (CA), autre que la zone de non-détection (NA1, NA2).

# FIG. 1

# FIG. 2

# FIG. 3

# FIG. 4

# FIG. 5

```
      START
        ↓
  OBTAIN IMAGES          ~S1
        ↓
     OBTAIN
 DISPARITY IMAGE          ~S2
        ↓
DERIVE COORDINATES OF     ~S3
  FEATURE POINTS
        ↓
REMOVE UNNECESSARY        ~S4
  FEATURE POINTS
        ↓
 EXTRACT OBSTACLE         ~S5
        ↓
DERIVE POSITION OF        ~S6
    OBSTACLE
        ↓
       END
```

# FIG. 6

$P1\left(-\left(\dfrac{W1}{2}+W2\right),\ 0,\ H1\right)$

$P3\left(-\left(\dfrac{W1}{2}+W2\right),\ L1,\ H1\right)$

$P2\left(\dfrac{W1}{2}-W2,\ 0,\ H1\right)$

$P4\left(\dfrac{W1}{2}-W2,\ L1,\ H1\right)$

$P5\left(-\left(\dfrac{W1}{2}+W2\right),\ 0,\ 0\right)$

$P7\left(-\left(\dfrac{W1}{2}+W2\right),\ L1,\ 0\right)$

$P6\left(\dfrac{W1}{2}-W2,\ 0,\ 0\right)$

$P8\left(\dfrac{W1}{2}-W2,\ L1,\ 0\right)$

# FIG. 7

WORLD COORDINATE SYSTEM

# FIG. 8

# FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019187937 A1
- JP 2019089636 A

- JP 2016206801 A

**Non-patent literature cited in the description**

- Performance metrics for intelligent systems (PERMIS) workshop, 2010, NISTSP 1113-PERMIS. *NATIONAL INSTITUTE OF STANDARDS AND TECHNOLOGY (NIST)*, 31 December 2010, 1-392